(19) Europäisches Patentamt European Patent Office Office européen des brevets

(11) EP 2 072 578 B1

(12) # EUROPÄISCHE PATENTSCHRIFT

(45) Veröffentlichungstag und Bekanntmachung des Hinweises auf die Patenterteilung:
**08.12.2010 Patentblatt 2010/49**

(51) Int Cl.:
***C08L 33/06*** *(2006.01)*

(21) Anmeldenummer: **08171788.6**

(22) Anmeldetag: **16.12.2008**

(54) **Wässriges Bindemittel für faserförmige oder körnige Substrate**

Aqueous adhesive for fibrous or granular substrates

Liant aqueux pour substrats en forme de fibres ou de grains

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 EP 07024635**

(43) Veröffentlichungstag der Anmeldung:
**24.06.2009 Patentblatt 2009/26**

(73) Patentinhaber: **BASF SE**
**67056 Ludwigshafen (DE)**

(72) Erfinder:
- **Aulenta, Francesca**
  **68165, Mannheim (DE)**
- **Braun, Markus**
  **69118, Heidelberg (DE)**
- **Schneller, Arnold**
  **64342, Seeheim-Jugenheim (DE)**
- **Dyllick-Brenzinger, Rainer**
  **67435, Neustadt (DE)**
- **Michl, Kathrin**
  **67063, Ludwigshafen (DE)**

(56) Entgegenhaltungen:
**GB-A- 1 053 829**
**GB-A- 1 094 315**
**US-A- 2 313 144**
**US-A- 4 059 665**
**US-A- 5 718 728**

EP 2 072 578 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Der Gegenstand der vorliegenden Erfindung betrifft ein wässriges Bindemittel für körnige und/oder faserförmige Substrate, enthaltend als wirksame Bestandteile

a) ein Polymerisat A, welches zu

| | |
|---|---|
| 0,1 bis 70 Gew.-% | aus Itaconsäure, Itaconsäureanhydrid und/oder Itacon- säurealkylester (Monomer A1), und |
| 30 bis 99,9 Gew.-% | wenigstens einer ethylenisch ungesättigten C3- bis C4-Mono- oder Dicarbonsäure (Monomere A2) |

in einpolymerisierter Form aufgebaut ist, wobei sich die Monomeren A1 und A2 zu 100 Gew.-% (Gesamtmonomerenmenge) addieren, und

b) ein Polyol B, welches wenigstens 2 Hydroxylgruppen aufweist.

Gegenstand der vorliegenden Erfindung ist ebenfalls die Verwendung des wässrigen Bindemittels zur Herstellung von Formkörpern, ein Verfahren zur Herstellung von Formkörpern unter Verwendung von faserförmigen oder körnigen Substraten und wässrigem Bindemittel sowie die Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A 445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A 583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

Die EP-A 651088 beschreibt entsprechende Bindemittel für Substrate aus Cellulosefaser. Diese Bindemittel enthalten zwingend einen phosphorhaltigen Reaktionsbeschleuniger.

Die EP-A 672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A 2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Aufgabe der vorliegenden Erfindung war es, ein alternatives formaldehydfreies Bindemittelsystem für faserförmige und/oder körnige Substrate zur Verfügung zu stellen.

Demgemäß wurde das eingangs definierte wässrige Bindemittel gefunden.

Vorteilhaft enthält das wässrige Bindemittel jedoch ein Polymerisat A, welches aus

| | |
|---|---|
| 1 bis 50 Gew.-% | wenigstens eines Monomeren A1, und |
| 50 bis 99 Gew.-% | wenigstens eines Monomeren A2 |

und mit besonderem Vorteil aus

| | |
|---|---|
| 1 bis 25 New.-% | wenigstens eines Monomeren A1, und |
| 75 bis 99 Gew.-% | wenigstens eines Monomeren A2 |

in einpolymerisierter Form aufgebaut ist.

Als Monomere A 1 kommen Itaconsäure, Itaconsäureanhydrid und/oder Itaconsäurealkylester in Betracht. Dabei sollen unter Itaconsäurealkylester sowohl die entsprechenden Itaconsäuremonoalkylester, wie auch die Itaconsäuredialkylester, insbesondere die entsprechenden C1- bis C20-Alkylester, bevorzugt die Itaconsäuremono- oder dimethyl- bzw. -ethylester verstanden werden. Selbstverständlich sollen auch die entsprechenden Salze der Itaconsäure, wie beispielsweise die Alkalimetall-, Erdalkalimetall oder die Ammoniumsalze, insbesondere die entsprechenden Natrium-, Kalium- oder Ammoniumsalze erfindungsmäßig umfasst sein. Mit besonderem Vorteil wird Itaconsäure oder Itaconsäureanhydrid eingesetzt, wobei jedoch Itaconsäure insbesondere bevorzugt ist.

Das Polymerisat A enthält 0,1 bis 70 Gew.-%, bevorzugt 1 bis 50 Gew.-% und insbesonderte bevorzugt 1 bis 25 Gew.-%, wenigstens eines Monomeren A1 in einpolymerisierter Form.

Die Monomere A2 sind ethylenisch ungesättigte, C3- oder C4-Mono- oder Dicarbonsäuren sowie deren wasserlöslichen Salze, insbesondere deren Alkalimetall- oder Ammoniumsalze, wie beispielsweise Acrylsäure, Methacrylsäure, Ethylacrylsäure, Allylessigsäure, Crotonsäure, Vinylessigsäure, Fumarsäure, Maleinsäure, und Methylmaleinsäure sowie die Ammonium-, Natrium- oder Kaliumsalze der vorgenannten Säuren.

Das Polymerisat A enthält 30 bis 99,9 Gew.-%, bevorzugt 50 bis 99 Gew.-% und insbesondere bevorzugt 75 bis 99 Gew.-%, wenigstens eines Monomeren A2 in einpolymerisierter Form.

Mit besonderem Vorteil enthält das Polymerisat A als Monomer A2 ausschließlich wenigstens eine ethylenisch ungesättigte C3- bis C4-Mono-oder Dicarbonsäure in einpolymerisierter Form. Insbesondere vorteilhaft enthält das Polymerisat A ausschließlich Acrylsäure und/oder Methacrylsäure, bevorzugt ausschließlich Acrylsäure in einpolymerisierter Form.

Die Herstellung der Polymerisate A ist dem Fachmann im Prinzip geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff).

Erfindungsgemäß ist es dabei möglich, gegebenenfalls jeweils eine Teil- oder die Gesamtmenge der Monomeren A1 und/oder A2 im Polymerisationsgefäß vorzulegen. Es ist aber auch möglich, jeweils die Gesamtmenge oder die jeweils gegebenenfalls verbliebene Restmenge der Monomeren A1 und/oder A2 unter Polymerisationsbedingungen während der Polymerisationsreaktion zuzudosieren. Die Gesamtmengen oder die gegebenenfalls verbliebenen Restmengen an Monomeren A1 und/oder A2 können dem Polymerisationsgefäß dabei diskontinuierlich in einer oder mehreren Portionen oder kontinuierlich mit gleichbleibenden oder sich verändernden Mengenströmen zudosiert werden. Häufig wird wenigstens eine Teilmenge der Monomeren A1 und/oder A2 und vorteilhaft ausschließlich der Monomeren A1 im Polymerisationsmedium vor Initiierung der Polymerisationsreaktion vorgelegt.

Häufig erfolgt die radikalisch initiierte Lösungspolymerisation der Monomeren A1 und A2 in einem protischen oder einem aprotischen organischen Lösungsmittel, wobei aprotische Lösungsmittel insbesondere bevorzugt sind. Als aprotische organische Lösungsmittel kommen alle organischen Lösemittel in Frage, welche unter Polymerisationsbedingungen kein ionisierbares Proton im Molekül enthalten bzw. einen pKs-Wert aufweisen, welcher größer als der von Wasser ist. Beispiele für derartige Lösungsmittel sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige C1- bzw. C2-Fluorchlorkohlenwasserstoffe, aliphatische C2- bis C5-Nitrile, wie Acetonitril, Propionitril, Butyronitril oder Valeronitril, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

In einer Ausführungsform werden solche aprotischen organischen Lösungsmittel ausgewählt, in welchen sich die jeweils eingesetzten Radikalinitiatoren gut lösen. Insbesondere werden solche aprotischen organischen Lösemittel eingesetzt, in denen sich neben den Radikalinitiatoren auch die Polymerisate A gut lösen. Insbesondere bevorzugt werden solche aprotischen organischen Lösungsmittel ausgewählt, welche sich zusätzlich in einfacher Weise, beispielsweise durch Destillation, Inertgasstrippung und/oder Wasserdampfdestillation aus der erhaltenen Polymerisat A-Lösung abtrennen lassen. Bevorzugte Beispiele hierfür sind Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, oder Cyclohexanon. Besonders bevorzugte Lösungsmittel sind die genannten Ester aus aliphatischen C1- bis C5-Carbonsäuren oder aromatischen Carbonsäuren mit aliphatischen C1- bis C5-Alkoholen, insbesondere jedoch Essigsäureethylester und Buttersäureethylester sowie C4- bis C6-Ketone, insbesondere Methylethylketon. Günstig ist es, wenn das Lösungsmittel bei Atmosphärendruck (1 atm = 1,013 bar absolut) einen Siedepunkt ≤ 140 °C, häufig ≤ 125 °C und insbesondere ≤ 100 °C aufweist oder mit Wasser ein niedrig siedendes Wasser/Lösungsmittel-Azeotropgemisch bildet. Selbstverständlich kann auch eine Mischung mehrerer Lösungsmittel eingesetzt werden. Mit besonderem Vorteil erfolgt die radikalische Polymerisation der Monomeren A1 und A2 jedoch ausschließlich in Wasser.

Die Menge an Lösungsmittel bei der Herstellung des Polymerisats A beträgt 40 bis 9900 Gew.-Teile, bevorzugt 70 bis 400 Gew.-Teile und insbesondere bevorzugt 80 bis 200 Gew.-Teile, jeweils bezogen auf 100 Gew.-Teile Gesamtmonomeren.

Erfindungsgemäß ist es möglich, gegebenenfalls eine Teil- oder die Gesamtmenge an Lösungsmittel im Polymerisationsgefäß vorzulegen. Es ist aber auch möglich, die Gesamtmenge oder die gegebenenfalls verbliebene Restmenge an Lösungsmittel während der Polymerisationsreaktion zuzudosieren. Die Gesamtmenge oder die gegebenenfalls verbliebene Restmenge an Lösungsmittel kann dem Polymerisationsgefäß dabei diskontinuierlich in einer oder mehreren Portionen oder kontinuierlich mit gleich bleibenden oder sich verändernden Mengenströmen zudosiert werden. Vorteilhaft wird eine Teilmenge des Lösungsmittels als Polymerisationsmedium vor Initiierung der Polymerisationsreaktion im Polymerisationsgefäß vorgelegt und die verbliebene Restmenge gemeinsam mit den Monomeren A1 und/oder A2 und dem Radikalinitiator während der Polymerisationsreaktion zudosiert.

Unter Initiierung der Polymerisationsreaktion wird der Start der Polymerisationsreaktion der im flüssigen Polymerisationsmedium vorliegenden Monomeren nach Radikalbildung des Radikalinitiators verstanden. Dabei kann die Initiierung der Polymerisationsreaktion durch Zugabe von Radikalinitiator zum flüssigen Polymerisationsmedium unter Polymerisationsbedingungen erfolgen. Es ist aber auch möglich, dass eine Teil- oder die Gesamtmenge des Radikalinitiators dem Monomeren A1 und/oder A2 enthaltenden flüssigen Polymerisationsmedium unter Bedingungen, welche nicht geeignet sind eine Polymerisationsreaktion auszulösen, beispielsweise bei tiefer Temperatur, zugegeben werden

und danach im flüssigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte Polymerisationsreaktion der Monomeren A1 und A2 mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten. Insbesondere sind alle diejenigen Radikalinitiatoren geeignet, welche unter Polymerisationsbedingungen eine Halbwertszeit ≤ 4 Stunden, vorzugsweise ≤ 1 Stunde und vorteilhaft ≤ 30 Minuten aufweisen.

Wird die Polymerisation der Monomeren A1 und A2 in wässrigem Medium durchgeführt, werden so genannte wasserlösliche Radikalinitiatoren, welche der Fachmann üblicherweise bei der radikalisch initiierten wässrigen Emulsionspolymerisation verwendet, eingesetzt. Wird dagegen die Polymerisation der Monomeren in einem organischen Lösungsmittel durchgeführt, werden so genannte öllösliche Radikalinitiatoren, welche der Fachmann üblicherweise bei der radikalisch initiierten Lösungspolymerisation verwendet, eingesetzt.

Zur Auslösung der radikalisch initiierten wässrigen Emulsionspolymerisation werden sogenannte wasserlösliche Radikalinitiatoren eingesetzt. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide. wie Alkylhydroperoxide, beispielsweise tert.-Butyl-, p-Mentyl- oder Cumylhydroperoxid. sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (Al-BA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis (tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat. Als gut öllösliche Azoinitiatoren finden beispielsweise 2,2'-Azobis(isobutyronitril), 2,2'-Azobis(2,4-dimethylvaleronitril) oder 4,4'-Azobis(4-cyanopentansäure) Verwendung.

Die Menge an eingesetztem Radikalinitiator beträgt in der Regel 0,01 bis 10 Gew.-%, bevorzugt 0,1 bis 8 Gew.-% und insbesondere bevorzugt 0,5 bis 5 Gew.-%, jeweils bezogen auf die Gesamtmonomerenmenge.

Erfindungsgemäß ist es möglich, gegebenenfalls eine Teil- oder die Gesamtmenge an Radikalinitiator im flüssigen Polymerisationsmedium vorzulegen. Es ist aber auch möglich, die Gesamtmenge oder die gegebenenfalls verbliebene Restmenge an Radikalinitiator unter Polymerisationsbedingungen während der Polymerisationsreaktion zuzudosieren. Die Gesamtmenge oder die gegebenenfalls verbliebene Restmenge an Radikalinitiator kann dem flüssigen Polymerisationsmedium dabei diskontinuierlich in einer oder mehreren Portionen oder kontinuierlich mit gleich bleibenden oder sich verändernden Mengenströmen zudosiert werden. Insbesondere vorteilhaft erfolgt die Dosierung der Radikalinitiator während der Polymerisationsreaktion kontinuierlich mit gleich bleibendem Mengenstrom - insbesondere in Form einer Lösung des Radikalinitiators mit dem verwendeten Lösungsmittel.

Vorteilhaft weist Polymerisat A ein gewichtsmittleres Molekulargewicht ≥ 1000 g/mol und ≤ 200000 g/mol auf. Günstig ist es, wenn das gewichtsmittlere Molekulargewicht von Polymer A ≤ 150000 g/mol oder ≤ 100000 g/mol ist. Vorteilhaft weist Polymer A ein gewichtsmittleres Molekulargewicht ≥ 3000 g/mol, insbesondere vorteilhaft ≥ 10000 g/mol und mit besonderem Vorteil ≥ 50000 g/mol auf. Mit besonderem Vorteil liegt das gewichtsmittleres Molekulargewicht im

Bereich ≥ 50000 und ≤ 150000 g/mol. Die Einstellung des gewichtsmittleren Molekulargewichts bei der Herstellung von Polymerisat A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatograpie.

Geeignete Radikalkettenregler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Weitere Radikalkettenregler sind dem Fachmann geläufig. Falls die Polymerisation in Gegenwart von Radikalkettenreglern durchgeführt wird, werden häufig 0,01 bis 10 Gew.-%, bezogen auf die Gesamtmonomerenmenge, verwendet.

Erfindungsgemäß kann wenigstens eine Teilmenge des Radikalkettenreglers im Polymerisationsgefäß vorgelegt werden und die gegebenenfalls verbliebene Restmenge dem Polymerisationsgefäß nach Initiierung der radikalischen Polymerisationsreaktion diskontinuierlich in einer Portion, diskontinuierlich in mehreren Portionen sowie kontinuierlich mit gleich bleibenden oder sich verändernden Mengenströmen zugegeben werden. Häufig wird die Gesamtmenge des Radikalkettenreglers gemeinsam mit den Monomeren A1 und A2 dem Polymerisationsgefäß während der Polymerisationsreaktion kontinuierlich zugegeben.

Durch gezielte Variation von Art und Menge der Monomeren A1 und A2 ist es dem Fachmann erfindungsgemäß möglich, Polymerisate A herzustellen, die eine Glasübergangstemperatur bzw. einen Schmelzpunkt im Bereich von -60 bis 270 °C aufweisen. Erfindungsgemäß vorteilhaft beträgt die Glasübergangstemperatur des Polymerisats A ≥ -20 °C und ≤ 110 °C und bevorzugt ≥ 20 °C und ≤ 110 °C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989.

Die erfindungsgemäß erhaltenen Polymerisat-A-Lösungen weisen üblicherweise Polymerisatfeststoffgehalte von ≥ 10 und ≤ 70 Gew.-%, häufig ≥ 20 und ≤ 65 Gew.-% und oft ≥ 35 und ≤ 55 Gew.-%, jeweils bezogen auf die entsprechende Polymerisat-A-Lösung auf.

Die radikalisch initiierte Polymerisation erfolgt - abhängig vom verwendeten Radikalinitiator - üblicherweise bei Temperaturen im Bereich von 40 bis 180 °C, vorzugsweise von 50 bis 150 °C und insbesondere von 60 bis 130 °C. Sobald die Temperatur bei der Polymerisationsreaktion oberhalb des Siedepunktes des Lösungsmittels und/oder einem der Monomeren A1 und A2 liegt, wird die Polymerisation vorteilhaft unter Druck (> 1 atm absolut) durchgeführt. Die Temperatur- und Druckbedingungen sind dem Fachmann geläufig oder können von diesem in wenigen Routineversuchen ermittelt werden.

Die Herstellung der Polymerisate A kann in den üblichen Polymerisationsgefäßen erfolgen, wie beispielsweise Glaskolben (Labor) oder Rührkessel (technischer Maßstab), welche mit einem Anker-, Blatt-, Impeller-, Kreuzbalken-, MIG- oder Mehrstufenimpulsgegenstromrührer ausgestattet sind. Insbesondere bei der Polymerisation in Anwesenheit lediglich kleiner Mengen an Lösungsmittel kann es auch vorteilhaft sein, die Polymerisation in üblichen ein- oder zweiwelligen (gleich- oder gegenläufig) Kneterreaktoren, wie beispielsweise solchen der Fa. List oder Buss SMS durchzuführen.

Erfolgt die Herstellung von Polymerisat A in einem organischen Lösungsmittel, so wird in der Regel das organische Lösungsmittel zumindest teilweise, vorteilhaft zu ≥ 50 Gew.-% oder ≥ 90 Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck

(< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist.

Erfindungsgemäß enthält das wässrige Bindemittel neben dem Polymerisat A als wirksamen Bestandteil noch eine eine Polyolverbindung B mit wenigstens 2 Hydroxylgruppen (Polyol B). Dabei werden vorteilhaft solche Polyole B eingesetzt, die bei den Temperaturen der Trocknung bzw. Aushärtung nicht oder lediglich gering flüchtig sind und daher einen entsprechend niedrigen Dampfdruck aufweisen.

Dabei kann das Polyol B prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer polymerer Polyole B finden sich u.a. in WO 97/45461, Seite 3, Zeile 3 bis Seite 14, Zeile 33.

Als Polyol B mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan sowie bevorzugt Alkanolamine, wie beispielsweise Verbindungen der allgemeinen Formel I

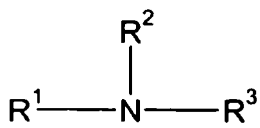 (I),

in der $R^1$ für ein H-Atom, eine C1- bis C10-Alkylgruppe oder eine C2- bis C10-Hydroxyalkylgruppe steht und $R^2$ und $R^3$ für eine C2- bis C10-Hydroxyalkylgruppe stehen.

Besonders bevorzugt stehen $R^2$ und $R^3$ unabhängig voneinander für eine C2- bis C5-Hydroxyalkylgruppe und $R^1$ für ein H-Atom, eine C1- bis $C_5$-Alkylgruppe oder eine C2-bis C5-Hydroxyalkylgruppe.

Als Verbindungen der Formel I seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer Polyole B mit einem Molekulargewicht ≤ 1000 g/mol finden sich ebenfalls in WO 97/45461, Seite 3, Zeile 3 bis Seite 14, Zeile 33.

Bevorzugt wird das Polyol B ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere besonders bevorzugt ist.

Bei den erfindungsgemäß einsetzbaren wässrigen Bindemitteln werden das Polymerisat A und das Polyol B bevorzugt in einem solchen Mengenverhältnis zueinander eingesetzt, dass das Gewichtsverhältnis von Polymerisat A zu Polyol B 1:10 bis 100:1, vorteilhaft 1:5 bis 50:1 und insbesondere vorteilhaft 1:1 bis 20:1 beträgt.

Insbesondere vorteilhaft werden die Mengen an Polymerisat A und Polyol B so gewählt, dass das Verhältnis der Anzahl von Äquivalenten Carboxylgruppen des Polymerisats A zu der Anzahl von Äquivalenten Hydroxylgruppen des Polyols B 100:1 bis 1:5, bevorzugt 50:1 bis 1:3 und besonders bevorzugt 10:1 bis 1:2 beträgt (wobei die Anhydridgruppen hierbei als 2 Carboxylgruppen berechnet werden). Insbesondere bevorzugt beträgt das Verhältnis der Anzahl von Äquivalenten Carboxylgruppen des Polymerisats A zu der Anzahl von Äquivalenten Hydroxylgruppen des Polyols B 0,5 bis 5.

Die Herstellung der erfindungsgemäß einsetzbaren wässrigen Bindemittel ist dem Fachmann geläufig und erfolgt beispielsweise in einfacher Weise durch Zugabe des Polyols B zur wässrigen Lösung des Polymerisats A.

Die vorgenannten wässrigen Bindemittel enthalten vorzugsweise ≤ 1,5 Gew.-%, häufig ≤ 1,0 Gew.-%, oft ≤ 0,5 Gew.-% sowie häufig ≥ 0,1 Gew.-% und oft ≥ 0,3 Gew.-%, bezogen auf die Summe der Gesamtmengen an Polymerisat A und Polyol B (fest/fest) eines Phosphor enthaltenden Reaktionsbeschleunigers. Phosphor enthaltende Reaktionsbeschleuniger sind beispielsweise in EP-A 583086 und EP-A 651088 offenbart. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die erfindungsgemäßen wässrigen Bindemittel enthalten jedoch vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch dem Fachmann geläufige Veresterungskatalysatoren enthalten, wie beispielsweise Schwefelsäure oder p-Toluolsulfonsäure bzw. Titanate oder Zirkonate.

Desweiteren können die erfindungsgemäß wässrigen Bindemittel auch weitere, dem Fachmann geläufige optionale Hilfsstoffe, wie beispielsweise sogenannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Sollen die erfindungsgemäßen wässrigen Bindemittel als Bindemittel für Mineralfasern und/oder Glasfasern bzw. daraus hergestellte Vliese eingesetzt werden, so wird den wässrigen Bindemitteln vorteilhaft ≥ 0,001 und ≤ 5 Gew.-% und insbesondere vorteilhaft ≥ 0,05 und ≤ 2 Gew.-%, bezogen auf die Summe der Gesamtmengen an Polymerisat A und Polyol B, wenigstens einer siliziumhaltigen organischen Verbindung (Haftvernetzer), beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropylriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropylrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind, zugesetzt.

Die erfindungsgemäß einsetzbaren wässrigen Bindemittel weisen üblicherweise Feststoffgehalte (gebildet aus der Summe der Gesamtmenge an Polymerisat A und Polyol B als Feststoff gerechnet) von ≥ 1 und ≤ 70 Gew.-%, häufig ≥ 5 und ≤ 65 Gew.-% und oft ≥ 10 und ≤ 55 Gew.-%, jeweils bezogen auf das wässrige Bindemittel auf.

Die erfindungsgemäß einsetzbaren wässrigen Bindemittel weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 3 und ≤ 5 auf. Dabei können zur Einstellung des pH-Wertes alle dem Fachmann geläufige basische Verbindungen eingesetzt werden. Vorteilhaft werden jedoch solche basischen Verbindungen verwendet, die bei den Temperaturen während der Trocknung bzw. Aushärtung nicht flüchtig sind, wie beispielsweise Natriumhydroxid, Kaliumhydroxid oder Natriumcarbonat.

Die vorgenannten wässrigen Bindemittel eignen sich vorteilhaft zur Verwendung als Bindemittel für faserförmige und körnige Substrate. Mit Vorteil lassen sich die genannten wässrigen Bindemittel daher zur Herstellung von Formkörpern aus faserförmigen und körnigen Substraten einsetzen.

Faserförmige und/oder körnige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand oder vorgenannte feinteilige inerte Füllstoffe sowie andere organische oder anorganische natürliche und/oder synthetische faserförmige und/oder körnige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte genadelte (mechanisch verfestigte) oder chemisch, beispielsweise mit Melamin/Formaldehyd-Harzen oder Polyvinylalkohol vorgebundene Faservliese mit umfassen. Insbesondere vorteilhaft ist das erfindungsgemäße wässrige Bindemittel als formaldehydfreies Bindemittelsystem für die vorgenannten Fasern bzw. daraus gebildete Faservliese geeignet.

Das Verfahren zur Herstellung eines Formkörpers aus einem faserförmigen und/oder körnigen Substrat und dem vorgenannten wässrigen Bindemittel erfolgt vorteilhaft dergestalt, dass das erfindungsgemäße wässrige Bindemittel auf die körnigen und/oder faserförmigen Substrate aufgebracht wird bzw. die körnigen und/oder faserförmigen Substrate mit dem erfindungsgemäßen wässrigen Bindemittel getränkt werden, gegebenenfalls die mit dem wässrigen Bindemittel imprägnierten körnigen und/oder faserförmigen Substrate in Form gebracht werden und die imprägnierten körnigen und/oder faserförmigen Substrate anschließend einem thermischen Behandlungsschritt bei einer Temperatur ≥ 130 °C unterzogen werden.

Die Imprägnierung der faserförmigen und/oder körnigen Substrate mit dem erfindungsgemäßen wässrigen Bindemittel erfolgt in der Regel dergestalt, dass das vorgenannte wässrige Bindemittel gleichmäßig auf die Oberfläche der faserförmigen und/oder körnigen Substrate aufgebracht wird. Dabei wird die Menge an wässrigem Bindemittel so gewählt, dass pro 100 g faserförmigem und/oder körnigem Substrat ≥ 0,1 g und ≤ 100 g, bevorzugt ≥ 1 g und ≤ 50 g und insbesondere bevorzugt ≥ 5 g und ≤ 30 g Bindemittel, gebildet aus der Summe der Gesamtmengen an Polymerisat A und Polyol B (als Feststoff gerechnet) eingesetzt werden. Die Imprägnierung der faserförmigen und/oder körnigen Substrate ist dem Fachmann geläufig und erfolgt beispielsweise durch Tränkung oder durch Besprühen der faserförmigen und/oder körnigen Substrate.

Nach der Imprägnierung wird das faserförmige und/oder körnige Substrat gegebenenfalls) in die gewünschte Form gebracht, beispielsweise durch Einbringen in eine beheizbare Presse oder Form. Daran anschließend wird das in Form gebrachte imprägnierte faserförmige und/oder körnige Substrat in einer dem Fachmann geläufigen Art und Weise getrocknet und ausgehärtet.

Häufig erfolgt die Trocknung bzw. Aushärtung des gegebenenfalls in Form gebrachten imprägnierten faserförmigen und/oder körnigen Substrats in zwei Temperaturstufen, wobei die Trocknungsstufe bei einer Temperatur < 130 °C, bevorzugt ≥ 20 °C und ≤ 120 °C und insbesondere bevorzugt ≥ 40 und ≤ 100 °C und die Aushärtungsstufe bei einer Temperatur ≥ 130 °C, bevorzugt ≥ 150 und ≤ 250 °C oder ≥ 160 und ≤ 220 °C und insbesondere bevorzugt ≥ 170 °C und ≤ 210 °C erfolgt.

Die Trocknungsstufe erfolgt dabei vorteilhaft dergestalt, dass bei einer Temperatur ≤ 100 °C so lange getrocknet wird, bis das in Form gebrachte imprägnierte faserförmige und/oder körnige Substrat, welches häufig noch nicht seine endgültige Form aufweist (sogenanntes Halbzeug) eine Restfeuchte ≤ 15 Gew.-%, bevorzugt ≤ 12 Gew.-% und insbesondere bevorzugt ≤ 10 Gew.-% aufweist. Dabei wird die Restfeuchte bestimmt, indem zuerst das erhaltene Halbzeug bei Raumtemperatur gewogen, dieses daran anschließend für 2 Minuten bei 130 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 130 °C, bezogen auf das Gewicht des Halbzeugs vor dem Trocknungsvorgang multipliziert mit dem Faktor 100.

Das so erhaltene Halbzeug ist nach Erwärmen auf eine Temperatur ≥ 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 130 °C solange erhitzt wird, bis dieses eine Restfeuchte ≤ 1 Gew.-%, bevorzugt ≤ 0,5 Gew.-% und insbesondere bevorzugt ≤ 0,1 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere eine gleiche oder verbesserte Reißfestigkeit im Vergleich zu den Formkörpern des Standes der Technik auf.

Die Erfindung soll anhand nachfolgender Beispiele erläutert werden.

Beispiele

A. Herstellung des Polymerisate A

In einen 2 1-Vierhalskolben, ausgerüstet mit einem Anker-Rührer, Rückflusskühler und zwei Dosiereinrichtungen, wurden bei 20 bis 25 °C (Raumtemperatur) 340 g entionisiertes Wasser, 5,3 mg Eisen-II-sulfat-Heptahydrat und X g Itaconsäure (IS) unter Stickstoffatmosphäre vorgelegt. Daran anschließend wurde die Vorlagenlösung unter Rühren auf 100 °C aufgeheizt. Nach Erreichen dieser Temperatur wurde der Initiatorzulauf, bestehend aus einer homogenen Lösung von 18,0 g Natriumpersulfat und 382 g entionisiertem Wasser, gestartet und mit konstantem Mengenstrom innerhalb von 4 Stunden in die Vorlage dosiert. 5 Minuten nach dem Start des Initiatorzulaufs wurde der Monomerenzulauf, bestehend aus einer homogenen Lösung von 420 g entionisiertem Wasser und Y g Acrylsäure (AS), gestartet und mit konstantem Mengenstrom innerhalb von 3 Stunden in die wässrige Polymerisationsmischung dosiert. Nach dem Ende des Monomerenzulaufs ließ man das Polymerisationsgemisch noch 2 Stunden bei Polymerisationstemperatur nachregagieren und kühlte dann die erhaltene klare Polymerlösung auf Raumtemperatur ab. Die bei der Herstellung der Polymerisate A eingesetzten Mengen an IS und AS sind in Tabelle 1 aufgelistet.

B. Herstellung des Vergleichspolymerisate V

Die Herstellung der Vergleichspolymerisate V erfolgte analog der Herstellung der Polymerisate A, mit dem Unterschied, dass Maleinsäureanhydrid (MSA) anstelle von IS bzw. weder IS noch MSA eingesetzt wurden. Die bei der Herstellung der Vergleichspolymerisate V eingesetzten Mengen an MSA und AS sind ebenfalls in Tabelle 1 aufgelistet.

Tabelle 1: Die bei der Herstellung der Polymerisate A und der Vergleichspolymerisate V eingesetzten Monomerenmengen

| Polymerisat | X g IS | Y g AS | X g MSA |
|---|---|---|---|
| A1 | 150 | 450 | - |
| A2 | 60 | 540 | - |
| A3 | 30 | 570 | - |
| V1 | - | 600 | - |

(fortgesetzt)

| Polymerisat | X g IS | Y g AS | X g MSA |
|---|---|---|---|
| V2 | - | 450 | 127 (≙ 150 MS) |
| V3 | - | 540 | 51 (≙ 60 MS) |
| V4 | - | 570 | 25,4 (≙ 30 MS) |

C. Herstellung der wässrigen Bindemittel

Zu den unter den vorgenannten Abschnitten A und B erhaltenen Polymerlösungen wurden bei Raumtemperatur unter Rühren 30 Gew.-Teile bzw. 15 Gew.-Teile Triethanolamin (TEA), bezogen auf 100 Gew.-Teile der zur Herstellung der Polymerisate A1 bis A3 eingesetzten Monomeren, gegeben. Bei den Vergleichspolymerisaten V1 bis V4 wurden ebenfalls 30 bzw. 15 Gew.-Teile TEA, bezogen auf 100 Gew.-Teile der bei der Herstellung eingesetzten Monomeren, zugegeben, wobei jedoch bei der Berechnung der 100 Gew.-Teile Monomeren die Mengen an MSA in Form der entsprechenden Mengen an Maleinsäure (MS) berücksichtigt wurden. Darüber hinaus wurden den erhaltenen wässrigen Bindemittellösungen unter Rühren jeweils noch 0,3 Gew.-% an 3-Aminopropyltriethoxysilan, bezogen auf 100 Gew.-Teile der bei der Herstellung eingesetzten Monomeren, zugegeben. Daran anschließend wurden die entsprechenden wässrigen Bindemittel mit entionisiertem Wasser auf einen Feststoffgehalt von 4 Gew.-%, bezogen auf die Gesamtmengen an Monomeren IS, AS, MS und TEA, verdünnt.

D. Anwendungstechnische Untersuchungen

Es wurden Glasfaservliese der Firma Whatman GF/A No. 1820-915 mit einem Flächengewicht von 54 g/$m^2$ eingesetzt.

Zur Imprägnierung wurden die Glasfaservliese in Längsrichtung über ein Endlos-PES-Siebband mit einer Bandlaufgeschwindigkeit von 60 cm pro Minute durch die vorgenannten 4 gew.-%igen wässrigen Bindemittelflotten geleitet. Durch anschließende Absaugung des wässrigen Bindemittels wurde der Nassauftrag auf 270 g/$m^2$ (entsprechend 10,8 g/$m^2$ Bindemittel als Feststoff gerechnet) eingestellt. Die so erhaltenen imprägnierten Glasfaservliese wurden auf einen Kunststoffnetz als Träger entweder für 3 Minuten bei 180 °C oder für 3 Minuten bei 200 °C in einem Mathis-Ofen bei maximalen Heißluftstrom getrocknet/ausgehärtet. Nach dem Abkühlen auf Raumtemperatur wurden Prüfstreifen mit einer Größe von 240 x 50 mm in Faserlängsrichtung geschnitten. Die erhaltenen Prüfstreifen wurden anschließend für 24 Stunden bei 23 °C und 50 % relativer Luftfeuchtigkeit im Klimaraum gelagert. Die in Abhängigkeit von der für das entsprechende wässrige Bindemittel eingesetzten Polymerlösung erhaltenen Glasfaservliesprüfstreifen werden im folgenden Prüfstreifen A1 bis A3 und V1 bis V4 bezeichnet.

Bestimmung der Reißkraft bei 23 °C

Die Bestimmung der Reißkraft erfolgte an einer Zugprüfmaschine der Firma Zwick-Roell, Typ Z005. Die Prüfstreifen A1 bis A3 und V1 bis V4 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 Messungen. Die in Tabelle 2 angegebenen Werte stellen jeweils den Mittelwert dieser Messungen dar.

Tabelle 2: Zusammenfassung der Reißkraftergebnisse [Wertangaben in N/50mm]

| | Gew.-Teile TEA | | Gew.-Teile TEA | |
|---|---|---|---|---|
| | 30 | 15 | 30 | 15 |
| Prüfstreifen | Aushärtung bei 180 °C | | Aushärtung bei 200 °C | |
| A1 | 112 | 114 | 113 | 122 |
| A2 | 112 | 125 | 107 | 116 |
| A3 | 127 | 125 | 114 | 123 |
| V1 | 92 | 88 | 101 | 96 |
| V2 | 111 | 112 | 111 | 118 |

(fortgesetzt)

| Prüfstreifen | Gew.-Teile TEA | | Gew.-Teile TEA | |
|---|---|---|---|---|
| | 30 | 15 | 30 | 15 |
| | Aushärtung bei 180 °C | | Aushärtung bei 200 °C | |
| V3 | 111 | 108 | 105 | 112 |
| V4 | 105 | 104 | 105 | 107 |

Aus den Ergebnissen ist klar ersichtlich, dass die unter Verwendung der erfindungsgemäßen wässrigen Bindemittel erhaltenen Prüfstreifen gleiches oder verbessertes Reißkraftverhalten aufweisen wie die gemäß des Standes der Technik verwendeten wässrigen Bindemittel.

**Patentansprüche**

1. Wässriges Bindemittel für körnige und/oder faserförmige Substrate, enthaltend als wirksame Bestandteile

    a) ein Polymerisat A, welches zu

    0,1 bis 70 Gew.-% aus Itaconsäure, Itaconsäureanhydrid und/oder Itaconsäurealkylester (Monomere A1), und
    30 bis 99,9 Gew.-% wenigstens einer ethylenisch ungesättigten C3- bis C4-Mono- oder Dicarbonsäure (Monomere A2)

    in einpolymerisierter Form aufgebaut ist, wobei sich die Monomeren A1 und A2 zu 100 Gew.-% (Gesamtmonomerenmenge) addieren, und
    b) ein Polyol B, welches wenigstens 2 Hydroxylgruppen aufweist.

2. Wässriges Bindemittel nach Anspruch 1, enthaltend ein Polymerisat A, aufgebaut aus

    1 bis 50 Gew.-% wenigstens eines Monomeren A1, und
    50 bis 99 Gew.-% wenigstens eines Monomeren A2.

3. Wässriges Bindemittel nach Anspruch 1 oder 2, enthaltend ein Polymerisat A, aufgebaut aus

    1 bis 25 Gew.-% wenigstens eines Monomeren A1, und
    75 bis 99 Gew.-% wenigstens eines Monomer A2.

4. Wässriges Bindemittel nach einem der Ansprüche 1 bis 3, wobei das Polymerisat A als Monomer A2 ausschließlich Acrylsäure und/oder Methacrylsäure in einpolymersierter Form enthält.

5. Wässriges Bindemittel nach einem der Ansprüche 1 bis 4, wobei das Polyol B ein Molekulargewicht ≤ 1000 g/mol aufweist.

6. Wässriges Bindemittel nach einem der Ansprüche 1 bis 5, wobei das Polyol B ein Alkanolamin ist.

7. Wässriges Bindemittel nach einem der Ansprüche 1 bis 6, wobei das Polyol B Triethanolamin ist.

8. Wässriges Bindemittel nach einem der Ansprüche 1 bis 7, wobei das Äquivalenzverhältnis der Carboxylgruppen des Polymerisats A zu den Hydroxylgruppen des Polyols B 0,5 bis 5 beträgt.

9. Wässriges Bindemittel nach einem der Ansprüche 1 bis 8, wobei der Feststoffgehalt, gebildet aus der Gesamtmenge an Polymerisat A und Polyol B, ≥ 1 und ≤ 70 Gew.-% beträgt.

10. Verwendung eines wässrigen Bindemittels gemäß einem der Ansprüche 1 bis 9 zur Herstellung von Formkörpern aus körnigen und/oder faserförmigen Substraten.

**11.** Verfahren zur Herstellung eines Formkörpers aus körnigen und/oder faserförmigen Substraten, **dadurch gekennzeichnet, dass** ein wässriges Bindemittel gemäß einem der Ansprüche 1 bis 9 auf die körnigen und/oder faserförmigen Substrate aufgebracht wird, gegebenenfalls die mit dem wässrigen Bindemittel behandelten körnigen und/oder faserförmigen Substrate in Form gebracht werden und die behandelten körnigen und/oder faserförmigen Substrate anschließend einem thermischen Behandlungsschritt bei einer Temperatur ≥ 130 °C unterzogen werden.

**12.** Verfahren nach Anspruch 11, **dadurch gekennzeichnet, dass** pro 100 g körniges und/oder faserförmiges Substrat ≥ 1 g und ≤ 50 g Bindemittel (als Summe der Gesamtmengen von Polymerisat A und Polyol B [fest/fest] gerechnet) eingesetzt werden.

**13.** Verfahren nach Anspruch 11 oder 12, **dadurch gekennzeichnet, dass** als körniges und/oder faserförmiges Substrat ein mechanisch verfestigtes oder chemisch vorgebundenes Faservlies eingesetzt wird.

**14.** Formkörper erhältlich nach einem Verfahren gemäß einem der Ansprüche 11 bis 13.

**Claims**

**1.** An aqueous binder for fibrous and/or granular substrates comprising as active constituents

a) an addition polymer A composed of

0.1 % to 70% by weight of itaconic acid, itaconic anhydride and/or itaconic acid alkyl ester (monomer A1), and
30% to 99.9% by weight of at least one ethylenically unsaturated C3 to C4 monocarboxylic or dicarboxylic acid (monomer A2)

in copolymerized form, the monomers A1 and A2 adding up to 100% by weight (total monomer amount), and
b) a polyol B having at least 2 hydroxyl groups.

**2.** The aqueous binder according to claim 1, comprising an addition polymer A composed of

1 % to 50% by weight of at least one monomer A1, and
50% to 99% by weight of at least one monomer A2.

**3.** The aqueous binder according to claim 1 or 2, comprising an addition polymer A composed of

1 % to 25% by weight of at least one monomer A1, and
75% to 99% by weight of at least one monomer A2.

**4.** The aqueous binder according to any one of claims 1 to 3, the addition polymer A comprising as monomer A2 exclusively acrylic acid and/or methacrylic acid in copolymerized form.

**5.** The aqueous binder according to any one of claims 1 to 4, the polyol B having a molecular weight ≤ 1000 g/mol.

**6.** The aqueous binder according to any one of claims 1 to 5, the polyol B being an alkanolamine.

**7.** The aqueous binder according to any one of claims 1 to 6, the polyol B being triethanolamine.

**8.** The aqueous binder according to any one of claims 1 to 7, the equivalence ratio of the carboxyl groups of the polymer A to the hydroxyl groups of the polyol B being 0.5 to 5.

**9.** The aqueous binder according to any one of claims 1 to 8, the solids content, formed from the total amount of polymer A and polyol B, being ≥ 1 % and ≤ 70% by weight.

**10.** The use of an aqueous binder according to any one of claims 1 to 9 for producing shaped articles from granular and/or fibrous substrates.

**11.** A process for producing a shaped article from granular and/or fibrous substrates, which comprises applying an

aqueous binder according to any one of claims 1 to 9 to the granular and/or fibrous substrates, if appropriate shaping the granular and/or fibrous substrates treated with the aqueous binder, and then subjecting the treated granular and/or fibrous substrates to a thermal treatment step at a temperature ≥ 130°C.

**12.** The process according to claim 11, wherein ≥ 1 g and ≤ 50 g of binder (calculated as the sum of the total amounts of polymer A and polyol B [solid/solid]) are used per 100 g of granular and/or fibrous substrate.

**13.** The process according to claim 11 or 12, wherein a mechanically consolidated or chemically bound fiber web is used as granular and/or fibrous substrate.

**14.** A shaped article obtainable by a process according to any one of claims 11 to 13.

**Revendications**

**1.** Liant aqueux pour substrat sous forme de grains et/ou de fibres, contenant comme constituants actifs

a) un polymère A, qui est formé, à raison de

- 0,1 à 70% en poids, d'acide itaconique, d'anhydride de l'acide itaconique et/ou d'ester alkylique d'acide itaconique (monomère A1), et
- 30 à 99,9% en poids d'au moins un acide monocarboxylique et/ou dicarboxylique éthyléniquement insaturé en C3 à C4 (monomère A2),

sous forme copolymérisée, où les monomères A1 et A2 s'ajoutent à 100% en poids (quantité totale de monomères), et
b) un polyol B, qui présente au moins 2 groupes hydroxyle.

**2.** Liant aqueux selon la revendication 1, contenant un polymère A, constitué par

- 1 à 50% en poids d'au moins un monomère A1, et
- 50 à 99% en poids d'au moins un monomère A2.

**3.** Liant aqueux selon la revendication 1 ou 2, contenant un polymère A, constitué par

- 1 à 25% en poids d'au moins un monomère A1, et
- 75 à 99% en poids d'au moins un monomère A2.

**4.** Liant aqueux selon l'une quelconque des revendications 1 à 3, où le polymère A contient, comme monomère A2, exclusivement de l'acide acrylique et/ou de l'acide méthacrylique sous forme copolymérisée.

**5.** Liant aqueux selon l'une quelconque des revendications 1 à 4, où le polyol B présente un poids moléculaire ≤ 1000 g/mole.

**6.** Liant aqueux selon l'une quelconque des revendications 1 à 5, où le polyol B est une alcanolamine.

**7.** Liant aqueux selon l'une quelconque des revendications 1 à 6, où le polyol B est la triéthanolamine.

**8.** Liant aqueux selon l'une quelconque des revendications 1 à 7, où le rapport d'équivalents des groupes carboxyle du polymère A aux groupes hydroxyle du polyol B est de 0,5 à 5.

**9.** Liant aqueux selon l'une quelconque des revendications 1 à 8, où la teneur en solides, formés de la quantité totale de polymère A et de polyol B est ≥ 1 et ≤ 70% en poids.

**10.** Utilisation d'un liant aqueux selon l'une quelconque des revendications 1 à 9 pour la préparation de corps façonnés en substrats sous forme de grains et/ou de fibres.

**11.** Procédé pour la préparation d'un corps façonné constitué par des substrats sous forme de grains et/ou de fibres,

**caractérisé en ce qu'**un liant aqueux selon l'une quelconque des revendications 1 à 9 est appliqué sur les substrats sous forme de grains et/ou de fibres, les substrats sous forme de grains et/ou de fibres traités avec le liant aqueux sont le cas échéant façonnés et les substrats sous forme de grains et/ou de fibres sont ensuite soumis à une étape de traitement thermique à une température ≥ 130°C.

**12.** Procédé selon la revendication 11, **caractérisé en ce qu'**on utilise par 100 g de substrat sous forme de grains et/ou de fibres ≥ 1 g et ≤ 50 g de liant (calculé en tant que somme des quantités totales de polymère A et de polyol B [solide/solide]).

**13.** Procédé selon la revendication 11 ou 12, **caractérisé en ce qu'**on utilise comme substrat sous forme de grains et/ou de fibres un non-tissé en fibres renforcé mécaniquement ou lié chimiquement au préalable.

**14.** Corps façonné, pouvant être obtenu selon un procédé selon l'une quelconque des revendications 11 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- WO 9745461 A


### In der Beschreibung aufgeführte Nicht-Patentliteratur


- **A. Echte.** Handbuch der Technischen Polymerchemie. VCH, 1993
- **B. Vollmert.** Grundriss der Makromolekularen Chemie. E. Vollmert Verlag, 1988, vol. 1
- **L. Kotzeva.** *J. Polym. Sci. A,* 1989, vol. 27 (4), 1325ff
- **C. Erbil et al.** *Polymer,* 2000, vol. 41, 1391ff
- **C. Yang ; X. Lu Yun.** *J. Polym. Sci.,* 2000, vol. 75 (2), 327ff
- **M. Sen et al.** *Polymer,* 1999, vol. 40 (9), 913ff
- **F. Wang et al.** *Anal. Chem.,* 1996, vol. 68, 2477ff
- **J. Velada et al.** *Macromol. Chem. and Phys.,* 1995, vol. 196, 3171ff
- **J.M. Cowie ; C. Haq.** *Br. Polym. J.,* 1977, vol. 9, 241ff
- **J. Velada et al.** *Polymer Degradation and Stability,* 1996, vol. 52, 273ff
- **A. Horta et al.** *Makromol. Chem., Rapid Commun.,* 1987, vol. 8, 523ff
- **T. Hirano et al.** *J. Polym. Sci. A,* 2000, vol. 38, 2487ff
- **B.E. Tate.** *Adv. Polymer Sci.,* 1967, vol. 5, 214ff
- **G. Kanig.** *Kolloid-Zeitschrift & Zeitschrift für Polymere,* vol. 190, 1
- **T.G. Fox.** *Bull. Am. Phys. Soc.,* 1956, vol. 1, 123
- Ullmann’s Encyclopädie der technischen Chemie. Verlag Chemie, 1980, vol. 19, 18
- Ullmann’s Ecyclopedia of Industrial Chemistry. VCH, 1992, vol. 5, A21, 169
- **J. Brandrup ; E.H. Immergut.** Polymer Handbook. J. Wiley, 1966